# EUROPEAN PATENT SPECIFICATION

(11) **EP 0 447 025 B1**
(45) Date of publication and mention of the grant of the patent: **06.11.1996**
(21) Application number: 91300614.4
(22) Date of filing: 28.01.1991
(51) Int. Cl.: G11B 5/127, G11B 5/84, G11B 5/71, G11B 5/72

(54) **Magnetic recording media and processes for manufacture thereof**
Magnetischer Aufzeichnungsträger und Verfahren zu seiner Herstellung
Milieu d'enregistrement magnétique et procédé pour fabriquer celui-ci

(30) Priority: 12.03.1990 US 491586
(43) Date of publication of application: 18.09.1991
(73) Proprietor: SEAGATE TECHNOLOGY INTERNATIONAL, Georgetown, Grand Cayman Island (KY)
(72) Inventor: Ranjan, Rajiv Y., Milpitas California 95035 (US); Lambeth, David N., Webster, New York 14580 (US)
(74) Representative: Sturt, Clifford Mark

(56) References cited:
- EP-A- 0 344 759
- DE-A- 3 629 582
- JP-A- 1 229 419
- JP-A- 5 423 508
- JP-A-63 275 029
- US-A- 4 377 288
- US-A- 4 996 662
- PATENT ABSTRACTS OF JAPAN, unexamined applications, P field, vol.12, No.140, April 28, 1988 THE PATENT OFFICE JAPANESE GOVERNMENT page 113 P 696
- PATENT ABSTRACTS OF JAPAN, unexamined applications, P ffield, vol.12 , No. 243, July 9, 1988 THE PATENT OFFICE JAPANESE GOVERNMENT page 91 P 728

## Description

The present invention relates to magnetic recording media and processes for manufacture thereof.

Magnetic disks and disk drives are well known for their utility in storing data in magnetizable form. The drives typically employ one or more disks rotated on central axis, in combination with data transducing heads positioned in close proximity to the recording surfaces of the disks and moved generally radially with respect to the disks. Generally these devices are of two kinds. The first uses flexible or "floppy" disks, with associated transducing heads contacting the recording surfaces at all times. The second type employs rigid disks rotated at much higher speeds than flexible disks. The transducing heads, during reading and recording operations, are maintained at a controlled distance from the recording surface, supported on a "bearing" of air as the disk rotates. The transducing heads contact their associated recording surfaces whenever the disks are stationary, when they accelerate from a stop, and during deceleration just before coming to a complete stop.

While all such magnetic recording devices experience at least some wear, the problem is particularly serious for the rigid disks and associated heads. This is due in part to the stricter design tolerances associated with rigid disks and heads, arising from the ever-present challenge of increasing the density of data stored on disk recording surfaces. It is considered desirable during reading and recording operations to maintain each transducing head as close to its associated recording surface as possible, i.e. to minimize the "flying" height of the head. A smooth, specular recording surface is thus preferred, as well as a smooth opposing surface of the associated transducing head. This permits closer proximity of the head to the disk and more predictable and consistent behaviour of the air bearing supporting the head.

However, if the head surface and recording surface are too flat, the precision match of these surfaces gives rise to excessive stiction and friction during the start up and stopping of the disk, causing wear to the head and recording surface which can lead eventually to a head crash.

In recognition of this difficulty, the recording surfaces of magnetic disks often are intentionally roughened to reduce the head/disc friction. In particular, a rigid disk may be formed with an aluminium substrate polished flat and plated with a nickel-phosphorous alloy. The alloy is polished to a substantially specular finish, e.g. to a roughness of less than 2.54 nm (0.1 microinch). The disk is then rotated between opposed pressure pads or rollers which support a cloth or paper coated with silicon carbide (SiC) or other suitable grit of a size predetermined to yield roughness peaks of about 25.4 nm (1 microinch). Peaks thus created tend to be jagged and have sharp edges, and are difficult to control in size, form and location as these factors depend largely upon the nature of the grit and the direction which the disc moves relative to the pressure pads or rollers.

In US-A-4,698,251, a polishing paper is applied to magnetic disks to form circumferential scratch marks having depths from 0.0002 to 0.1 microns into the nickel-phosphorous alloy layer coated onto an aluminium substrate. Following polishing, a chromium layer and a cobalt nickel magnetic layer are formed on the disk. In another embodiment, a nickel phosphorous layer is deposited onto an aluminium substrate, scratches are formed in the nickel-phosphorous layer, then a cobalt-phosphorous magnetic layer is deposited on the nickel-phosphorous layer.

As an alternative to using grit paper or cloth, US-A-4,326,229 discloses a protective film layer for covering a smooth recording medium layer of a magnetic disk. To form the protective coating, a solvent is applied in a spin coating process to form a film with radially extending sinusoidal jogs or undulations to increase surface roughness, which is said to reduce head wear.

Whilst each of the above approaches can be satisfactory under certain circumstances, all require compromise between the competing goals of reduced head/disk friction and minimum transducer flying height, and none affords the desired amount of control over surface texture.

EP-A-0 344 759 refers to the use of a laser light source for forming optical servo tracks in the data recording surface of a magnetic disk. There is no suggestion that one might want to roughen or otherwise treat an area other than the data storage regions.

JP-A-54-23508 discloses the use of a laser to form a contact start/stop zone on a disk. There is no disclosure of the use of pulsed radiant energy for forming the contact start/stop zone.

JP-A-1229419 which is reflected in the preambles of claims 1 and 15 discloses the uses of pulsed radiation to produce an uneven surface on a magnetic recording medium. The unevenness is produced on the data storage portion of the recording medium.

The present invention seeks to provide a magnetic recording medium in which peaks and indentations forming surface roughness are of a controlled size and shape for substantially reduced flying height, improved recording density, and improved transducing head and disk wear characteristics.

The invention also seeks to provide a process for controlling the texture of a strictly delineated portion of a magnetic disk recording surface while providing a specular finish on the remainder of the recording surface.

The invention further seeks to provide a process for controllably forming the surface texture of a magnetic data recording disk through control of the size and spacing between generally circular individual discontinuities providing texture.

From another aspect the invention seeks to provide a magnetic recording disk with designated surface areas for contact with data transducing heads, which designated areas exhibit substantially enhanced friction and wear characteristics.

According to one aspect of the present invention, there is provided a process for manufacturing a magnetic recording medium of the type having a data storage region over which a transducing head flies, and a head contact region for the magnetic transducing head during periods of acceleration, deceleration and non-movement of the recording medium relative to the transducing head, the process including forming a plurality of layers at least one of which is a substrate of non-magnetizable material, and at least one of which is a magnetizable film; with one of the layers defining an outer surface of the medium; and subjecting the surface of one of the layers to radiant energy in a treatment area to roughen the surface of said one layer at least in said treatment area thereof so that said outer surface of the recording medium has a rough surface portion due to said subjecting of the surface thereby forming the head contact region, another portion of the outer surface of the recording medium being the data storage region and having a smooth surface; characterised in that the radiant energy is pulsed selectively upon a plurality of locations of the treatment area to form at each of said locations a mark extended outwardly from a nominal surface plane of the layer to which radiant energy is applied by a height in the range of 5.08 to 50.8 nm (0.2 to 2 microinches), having a diameter range of 2.54 to 127 µm (0.1 to 5 mils), and being free of sharp edges.

According to another aspect of the present invention, there is provided a magnetic recording medium comprising a plurality of layers, at least one of which is a substrate of non-magnetizable material, and at least one of which is a magnetizable film, one of the layers defining an outer surface of the recording medium roughened by radiant energy applied to a treatment area to form upon the outer surface a rough surface portion, providing a head contact region for a magnetic transducing head during periods of acceleration, deceleration and non-movement of the recording medium relative to the transducing head, another portion of the outer surface of the recording medium being for the storage of data and having a smooth surface over which, in use, the transducer head flies; characterised in that the radiant energy is pulsed selectively upon a plurality of locations over a treatment area of one of said layers, forming at each of said locations a mark extended outwardly from a nominal surface plane of the layer to which radiant energy is applied by a height in the range of 5.08 to 50.8 nm (0.2 to 2 microinches), having a diameter in the range of 2.54 to 127 µm (0.1 to 5 mils) and being rounded and free of sharp edges.

The roughness of the rough surface may be at least twice the nominal roughness of the data storage portion.

Preferably, the concentrated energy is pulsed laser energy, and forms laser marks comprising rounded depressions in the selected surface at said locations.

With advantage in the case where the substrate body is a disk, the step of concentrating energy includes:
(a) rotating the disk at a controlled rotational velocity;
(b) simultaneously providing pulsed laser energy at a controlled frequency corresponding to the rotational velocity to form a first ring comprised of a series of rounded depressions in the substrate surface;
(c) after forming the ring, displacing the laser radially relative to the disk;
(d) providing pulsed laser energy at the controlled frequency while rotating the disk at the rotational velocity to form another ring comprised of another series of depressions concentric with the first ring and radially spaced apart from the first ring by a pitch corresponding to the amount of laser radial displacement; and
(e) repeating steps (c) and (d) to form a selected number of concentric rings, whereby the treatment area consists of a designated region in the form of an annular band.

Preferably, in such case, the width dimension of the transducer is aligned substantially radially of the disk, and the band has a width in the radial direction at least as great as the transducer width.

Conveniently, the step of concentrating energy is performed on the substrate.

The substrate body may be substantially rigid and formed of aluminium.

Alternatively, the step of concentrating energy may include:
(a) moving the substrate at a controlled velocity in the longitudinal direction;
(b) simultaneously directing a beam of pulsed laser energy upon the surface at a controlled frequency to form a first row of depressions;
(c) displacing the beam transversely by a selected pitch, and providing the beam of laser energy while longitudinally moving the substrate, to form a subsequent row of depressions parallel to the first row; and
(d) repeating step (c) a selected number of times to form the designated region as a longitudinal band of a selected transverse width.

The substrate body may include a layer of a nickel-phosphorous alloy plated onto a rigid aluminium body as a layer substantially uniform in thickness, the selected surface being a surface of the nickel-phosphorous alloy layer.

The pulsed laser energy may form, at each of said locations, a rounded central depression extending inwardly of a nominal surface plane of the selected surface, and a generally circular and rounded rim surrounding the central depression and extending outwardly of the nominal surface plane.

Preferably the step of concentrating energy includes selecting locations to distribute the depressions generally uniformly over the designated area.

Advantageously, the step of concentrating energy includes forming the depressions to occupy at least one-half of the area of the designated region.

Preferably, the selected surface is the substrate surface, and the steps of depositing the underlayer, the magnetizable film and the cover layer are performed in succession after the step of concentrating energy on the substrate surface.

Advantageously, the step of concentrating energy upon the substrate surface includes
(a) rotating the disk at a predetermined rotational velocity;
(b) simultaneously directing a pulsed beam of laser energy upon said substrate surface to form a multiplicity of the marks, one mark corresponding to each of said locations; and
(c) varying the radial position of said substrate surface to which said laser energy beam is directed.

A magnetic recording medium may be provided with a non-magnetizable body with a magnetizable film deposited thereover as a layer of substantially uniform thickness, characterised in that a specular substrate surface on the body or a recording surface on the film has a treatment area with depressions formed at a plurality of locations by selective energy concentration, the roughness of the treatment area being at least twice the nominal roughness of the specular substrate surface.

Preferably, the medium is a disk including a substantially rigid, non-magnetizable substrate having a substantially planar substrate surface, said disk further including a magnetizable film deposited over said substrate surface as a layer substantially uniform in thickness, and said disk having an outer surface having a nominal surface plane and characterised in that the outer surface includes a plurality of marks, each comprising a depression extended inwardly of the nominal plane toward said substrate a distance in the range of from 12.7 to 254 nm (0.5 to 10 microinches), and a rounded rim substantially surrounding each depression and extended outwardly of the nominal surface plane by a height of at least 5.08 nm (0.2 microinches), each of the rims having a diameter in the range of from 2.54 to 127 µm (01. to 5 mils).

Conveniently the outer surface includes a first area adapted for surface engagement with a magnetic transducing head, and a second area adapted for storage of magnetic data, wherein said head during recording and reading operations is maintained in spaced apart relation to the second area by an air film generated by rotation of said disk, and wherein said depression and rims are formed only throughout the first area.

Advantageously, the first area has a roughness of at least 12.7 nm (0.5 microinches) and the second area has a roughness of at most 2.54 nm (0.1 microinches).

The first area may be an annular band substantially concentric on a rotational axis of said disc, and having a radial dimension exceeding the width of said transducing head.

Adjacent ones of said marks may be spaced apart from one another by a distance no greater than five mils.

The depressions and corresponding rims may comprise at least fifty percent of the surface area of the first area.

The substrate may include an aluminium body and a layer of a nickel-phosphorous alloy plated on the body, with the depressions and rims formed in the nickel-phosphorous alloy, and the magnetizable film may be formed over the alloy to replicate the surface contours of said substrate surface.

A protective cover layer may be deposited on the magnetizable film as a layer substantially uniform in thickness to replicate the surface contours of the magnetizable film, the outer surface being the exposed surface of the cover layer.

Preferably, the second region lies radially inwardly of the first region.

Advantageously, the second region has a width radially of said disk in the range of from 1.27 mm to 12.7 mm (0.05 to 0.5 inches).

Conveniently, the depressions and rims are generally circular, with adjacent depressions spaced apart from one another by at most five mils.

The rims may have diameters in the range of from 2.54 to 127 µm (0.1 to 5.0 mils).

In an embodiment of the invention, the concentrated energy is provided by a pulsed or timed laser which forms at each location a rounded central depression extending inwardly of a nominal surface plane of the selected surface, and a generally circular and round rim surrounding the central depression and extending outwardly of the nominal surface plane. By rotating the disk at a controlled rate corresponding to the pulsed laser frequency, a ring comprising a series of depressions and rims is formed, with repeated rings combining to form an annular band. Preferably, the band is located radially inward of a data reading and recording area of the magnetizable film. This approach is particularly advantageous in connection with rigid disks and flying heads, in which the inner band is designated as a head contact area and the remaining surface area is always separated from the head by a bearing of air.

The substrate can include a rigid aluminium disc plated or otherwise coated with a layer of a nickel-phosphorous alloy, in which case the laser treated locations preferably are formed in the alloy layer but alternatively can be formed in the aluminium. As further alternatives, however, the laser marks including depressions and rims can be formed in any succeeding layer, e.g. a chromium underlayer, or a cobalt chromium or cobalt nickel magnetic recording layer. When the laser marks are formed in the aluminium or nickel-phosphorous alloy layers, succeeding layers tend to replicate them.

Laser surface texturizing provides a degree of control previously unavailable in grit cloth or paper texturing. The accuracy of the laser enables a precise delineation of the texturized area boundaries. The laser power, pulse length and focussing are variable to control the size and profile of laser spots or marks. Finally, the pulse frequency, in conjunction with the rotation or other relative translation of the disk, can be controlled to determine the spacing among adjacent marks. The rotund or rounded nature of the laser marks improves the degree of control in the topography of the magnetic recording medium, dramatically to improve wear characteristics, in particular as measured by CSS (contact start-stop) testing in conjunction with measuring the coefficient of friction and self-excited head-gimbal vibration energy. The high degree of control of the pulsed laser produced depressions and rims allows the flying height of the transducing head to be reduced, even over the designated treatment area. Restricting the treatment area only to a specific landing zone allows the recording areas to be extremely smooth, thus to allow further reduction in head flying height in the recording areas, resulting in improved recording density.

In connection with rigid as well as flexible disks, the generally circular depressions and surrounding rims are believed further to reduce frictional wear by acting as areas of collection for debris and any lubricant coated onto the disk.

How the invention can be carried into effect is hereinafter particularly described with reference to the accompanying drawings, in which:
Figure 1 is a plan view of a rotatable rigid magnetic recording disk formed in accordance with the present invention, and a transducing head supported generally for movement radially of the disk;
Figure 2 is an enlarged partial sectional view of the magnetic disk and head of Figure 1;
Figure 3 is a schematic view of an apparatus for controllably texturizing the disk in Figure 1 to provide a head contact area;
Figure 4 is a substantially enlarged perspective view of a laser mark formed in the surface;
Figure 5 is a schematic view of the profile of the laser mark;
Figure 6 is a perspective view similar to that of Figure 4, showing part of the transducing head contact area;
Figure 7 is a perspective view similar to that in Figure 6 showing an alternative surface texture;
Figure 8 is a schematic view showing a profile of a mechanically textured surface; and
Figures 9 and 10 are charts illustrating comparative coefficients of friction and self-excited head/gimbal energy, respectively, for surfaces texturized in accordance with the present invention as compared to conventionally texturized surfaces.

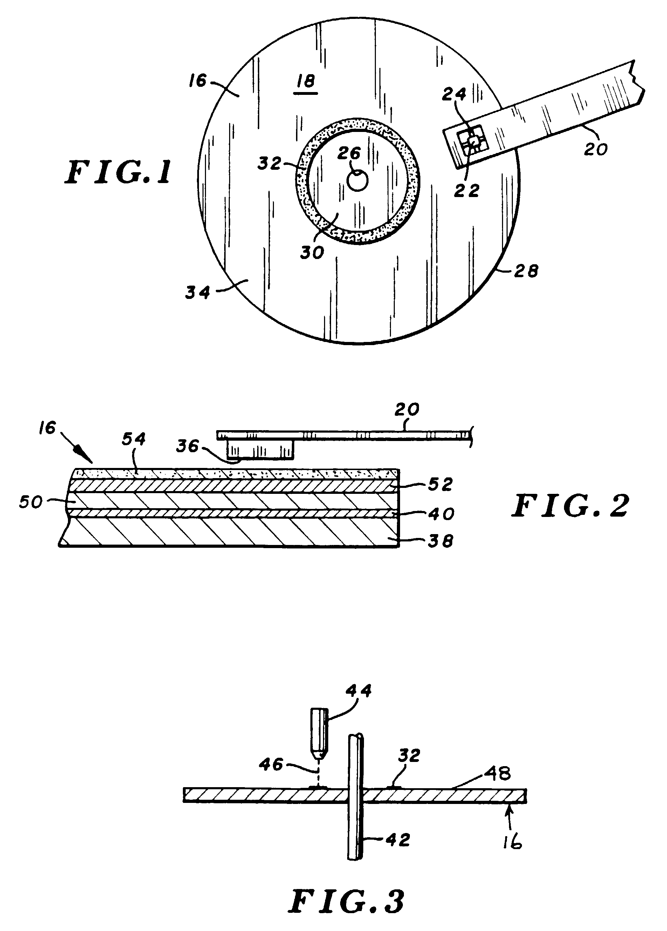

A rigid magnetic disk 16 (Figures 1 and 2) constitutes a data recording medium, is rotatable about a vertical axis and has a substantially planar and horizontal upper surface 18. A transducing head support arm 20 forms part of a carriage assembly (not shown) and is supported for linear reciprocation radially of the disk 16. A magnetic transducing head or slider 22 is supported by arm 20 by means of a head suspension 24, for movement relative to the disk with the arm. Suspension 24 does not support the head 22 rigidly relative to the arm, but allows for gimballing action of the head, i.e. limited vertical travel and limited rotation about pitch and roll axes.

At the centre of disk 16 is an opening 26 to accommodate a vertical spindle of a disk drive (not shown) used to rotate the disk. Between opening 26 and an outer circumferential edge 28 of the disc, upper surface 18 is divided into three annular sectors: a radially inward sector 30 used principally for clamping the disk with respect to the spindle, a head contact region or area or band 32, and a data storage region or area 34.

Whenever disk 16 is at rest, or rotating but at a speed substantially below its normal operating range, head 22 is in contact with upper surface 18. But when the disk rotates at least near its operating range, an "air bearing" is formed by air flowing between head 22 and upper surface 18 in the direction of disk rotation, which supports the head in parallel spaced apart relation to the recording surface. Typically the distance between a planar bottom surface 36 of head 22 and recording surface 18 sometimes referred to as the "flying height" of the head is about 254 (10 microinches) or less. Preferably the flying height is low, to position head 22 as close as possible to the recording surface 18. The closer the transducing head the more data can be stored on disk 16.

As mentioned above, arm 20 moves to position head 22 selectively over the recording surface. Alternatively a pivoted arm moving, head 22 in an arcuate path, could be used instead of arm 20 to accomplish substantially the same result. The radial position of head 22 is controlled before and after reading and recording operations, as well as during such operations. More particularly, during such operations head 22 while supported on the air bearing is selectively positioned radially across data storage area 34 either to record or to retrieve data at a particular location on the disk. After such operations and during deceleration of disk 16, arm 20 is moved radially inward to position head 22 directly over head contact area 32. Thus, by the time disk 16 has decelerated sufficiently to permit the head to engage the upper surface, head 22 already is aligned with the head contact area. Prior to the next recording or retrieval operation, acceleration of disk 16 from stop occurs with head 22 initially engaged with area 32. Arm 20 is not actuated to remove the head radially from area 32 until the head is supported by an air bearing, i.e. free of the disk.

Because upper surface 18 of the disk includes designated data storage and head contact areas, the surface contours or texture of each area can be formed in accordance with its function. More particularly, data storage area 34 preferably is polished or otherwise finished to a highly smooth, specular finish, having a surface roughness of at most 2.54 nm (0.1 microinch) to permit the desired low flying height for head 22. A further advantage of the specular finish is that, as compared to the texturized surface, foreign particles are readily observed, which simplifies optical inspection of disk 16. Roughness in this context means the height of the highest peaks above a nominal horizontal plane of the surface.

By contrast, head contact area 32 has a roughness of at least 12.7 nm (0.5 microinches). The increased surface roughness of the head contact sector in relation to the remainder of upper surface 18 is achieved by a controlled texturizing of the disk during its manufacture.

Disc 16 (Figure 2), is formed of a multiplicity of layers including a substrate 38, a recording layer 52 and a protective cover layer 54 over the recording layer. Disc 16 is formed first by polishing grinding or otherwise machining an aluminium substrate disk 38 to provide a substantially flat upper surface of the substrate. Next, a nickel-phosphorous (Ni-P) alloy is plated onto the upper surface of the aluminium disk, preferably evenly, to provide a substrate layer 40 substantially uniform in thickness, e.g. about 10 microns. Following plating, alloy layer 40 is polished to a roughness of generally less than 2.54 nm (0.1 microinch), for example, by a known silicon carbide grit lapping process. This normally involves a cloth or paper carrying the grit, and can also involve a liquid slurry containing grit in combination with a cloth or paper if desired. Thus the substrate surface is substantially planar and has a nominal roughness.

The preferred stage for the texturizing operation is immediately after polishing and cleaning alloy layer 40. Texturizing is accomplished by means of an apparatus (Figure 3) including a spindle 42 for supporting and rotating disk 16, and a pulsed mode Nd-YAG (yytrium aluminium garnet) laser 44 supported above the disk. The laser 44 may be supported in a vertical orientation (as shown) by structure (not shown) of the apparatus, or may be tilted away from the vertical. The structure also enables controlled stepwise movement of the laser 44 radially of the disk. The laser 44 is directed towards the disk generating a pulsed laser beam 46 selectively focussed on the upper surface 48 of Ni-P layer 40. Laser 44 is an ESI model 44 laser trimming system available from ESI, Inc. of Portland, Oregon, United States of America. Laser 44 is fired at a selected frequency into the disk while spindle 42 and disk 16 rotate.

The apparatus is used to provide a controlled, strictly delineated head contact area 32, comprising less than ten percent of the surface area of the surface 18. The area 32 forms an annular band having a width in the radial direction at least as great as the width of the head 22.

A salient feature of the present invention is the consistent, uniform texture over the entire head contact area. In achieving uniformity, two levels of control are involved: a micro level concerned with individual laser marks or spots, and a macro level concerning the pattern or arrangement of multiple laser spots. The nature of the individual laser spots is controlled primarily by the intensity or peak energy at which laser 44 is fired, and the duration of each firing, i.e. the pulse width. Somewhat secondary added factors include the way in which beam 46 is focussed, and the angle of approach. The vertical direction of the beam upon horizontal substrate surface 48 (Figure 3) i.e. an approach angle of 90 degrees, yields substantially circular spots, while an inclined angle, e.g. 45 degrees, would yield somewhat elliptical or oblong spots.

As for the pattern or arrangement of spots, the primary control factors include the frequency of repeated firings of laser 44, the speed of disk rotation, and the amount of radial stepping of the laser.

One preferred texturizing approach is to orient laser 44 vertically (Figure 3) and to maintain it stationary while rotating disk 16 and firing the laser at a selected frequency, coordinated with the disk rotational velocity to provide a selected distance between consecutive spots. A single rotation of the disk results in a ring of such spots concentric with central opening 26. Next, laser 44 is displaced radially by a desired inter-ring pitch, and with its vertical orientation maintained, fired at the predetermined frequency and phase relative to disk rotation. These steps are repeated until a plurality of concentric rings of laser spots form head contact area 32 as an annular band of a width substantially equal to the pitch times the number of rings.

With the nickel-phosphorous alloy layer 40 thus selectively texturized, the remaining layers 50, 52 and 54 (Figure 2) are applied, preferably by vacuum deposition, to complete disk 16. Layer 50 of chrome at a thickness of about 100 mm (1,000 angstroms) is sputter deposited onto the upper surface of the nickel-phosphorous alloy 40, to provide an underlayer for the recording layer 52. Layer 52, which can be a cobalt nickel alloy, a cobalt chromium alloy or the like, is sputtered onto the chromium layer to a thickness of about 50 to 70 nm (500 to 700 angstroms). Protective layer 54, for example carbon, is deposited onto the recording layer 52 at a thickness of about 30 nm (300 angstroms). Each of the layers is of substantially uniform thickness and replicates the surface contours of the surface of the layer below it.

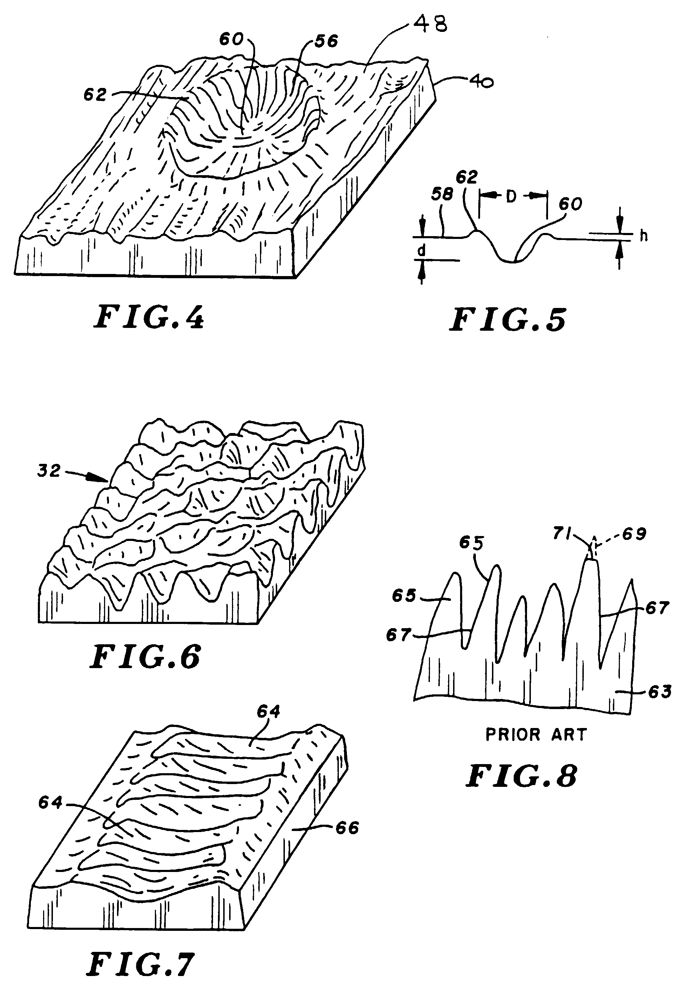

Process parameters primarily controlling size and shape of individual laser spots are the peak energy or intensity, and pulse duration, with the angle of approach and focus also contributing to the size and shape of any discontinuity. A typical spot formed by laser 44 when vertically oriented is shown in Figure 4 and represented in profile in Figure 5 as a single laser crater or spot 56. Crater 56 is a combination of two departures from a specular surface plane 58 (Figure 5) which can be considered the nominal plane of substrate surface 48, in this case the upper surface of nickel-phosphorous alloy layer 40. The first of these departures is a central depression or pit 60, with the other being a substantially circular rim or ridge 62 surrounding the pit. The height h (Figure 5) of rim 62 above nominal surface plane 58 is preferably in the range of from 12.7 to 20.32 nm (0.5 to 0.8 microinches) although a head contact area 32 in which rim heights h slightly exceed 25.4 nm (1 microinch) can still perform satisfactorily. The depth d (Figure 5) of pit 60 below plane 58 is typically about twice the rim height h, that is 25.4 to 40.64 nm (1 to 1.67 microinches). Thus the preferred surface roughness h of head contact area 32 is within a range of from 12.7 to 25.4 nm (0.5 to 1.0 microinches). The diameter D of crater 56, which is equivalent to the diameter of rim 62, usually is in the range of 0.1 to 4.0 mils.

The process parameters mentioned above can be varied to influence dimensions D, d and h. The rim height h is considered the most critical, and varies with peak power over a preferred range from about 0.1 kilowatts to about 5 kilowatts. The optimum peak power can of course vary with the particular laser employed, as well as the nature of the surface being texturized. However, in connection with nickel-phosphorous layer 40, it has been found advantageous to operate toward the low end of the 0.1 to 5 kilowatt range, just above a point at which melting occurs.

Depth d of pit 60, while not as critical as the height h of rim 62, nonethless serves a useful purpose, namely the entrapment and collection of media fragments, head fragments or other debris generated due to head/disk contact. Further, in connection with fluorocarbon lubricant coatings with tendencies toward liquid behaviour, the central depressions retain the lubricant coating when the disc is stopped. However, it is believed that as the disk begins spinning, the lubricant tends to travel upwardly out of the depressions and cover the rims, thus reducing dynamic friction in the head contact area.

Another useful feature of the invention is the rounded nature of the contours forming the pit and rim, with the rounded rims in particular contributing to substantially enhanced friction and wear characteristics over the long term. The rounded contours are believed to result from the flow of material due to surface tension forces while the material is cooling and returning to the solid from the liquid state. When beam 46 is fired upon the upper surface of nickel-phosphorous layer 40, the alloy absorbs heat which initially is concentrated in what later becomes the pit. Heat is rapidly dissipated in all directions radially away from the centre, principally by conduction. Near the centre, the amount of heat is sufficient momentarily to melt the alloy. The alloy soon cools and solidifies, but not before material is drawn outwardly away from the spot centre to form the central depression as well as the surrounding rim, apparently due to surface tension. The rounded contours are substantially and measurably more resistant to wear from contact with the transducing head.

To control the macro texture, i.e. the pattern or arrangement of spots, it has been found satisfactory to rotate disc 16 at a rate of from about 10 to about 100 rpm, whilst controlling the Q switching rate of laser 44 for a firing frequency over a range of about 5 to about 20 kHz. A satisfactory pitch or inter-ring spacing ranges from about 6.35 to 102 µm (0.25 to 4.0 mils), while a preferred range is from 12.7 to 25.4 µm (0.5 to 1.0 mils).

By using parameters chosen within these ranges, a desired result is shown in Figure 6 as an enlarged portion of head contact area 32. The spacing between adjacent spots in the radial direction (pitch), and the circumferential spacing between adjacent spots, are approximately equal to and can even be less than the average spot diameter of about 1 mil. The result is a substantially uniform, continuous texture comprised almost entirely of central depressions and raised rims about the depressions. The depressions are preferably distributed to occupy at least one half of the area of the designated treatment region. The following are examples within the prescribed texturizing parameter ranges.

### Example 1:

An aluminium rigid disk, having a diameter of 203.2 mm (8 inches) and a thickness of 1.905 mm (0.075 inches) was plated with a nickel-phosphorous alloy to a thickness of about 0.01016 mm (400 microinches). The laser was operated in the fundamental mode (designated TEM₀₀) and a current of 16.5 milliamperes was applied to the laser, to generate peak power of 0.2. kilowatts. The Q switching rate of the laser was maintained at 12 kilohertz, with a pulse duration of about 100 nanoseconds, while the disk was rotated at a rate of 25 rpm. The result was a circumferential ring in which adjacent laser spots nearly touched one another, spaced apart by a distance approximately equal to the average spot diameter. After each revolution of the disk, laser 44 was stepped or translated radially of the disk by a pitch of 20.3 µm (0.8 mils). 200 concentric rings were formed, creating an annular head sector or band with a width in the radial direction, of 160 mils. Individual spots in the band were observed using a phase shifting inferferometer in the form of a WYKO-3D surface profilometer available from WYKO Corporation of Tucson, Arizona, United States of America. The typical and predominant laser spot had a rim or ridge extending from about 12.7 to 20.32 nm (0.5 to 0.8 microinches) above the nominal surface, and a central depression with a depth of about 25.4 to 50.8 nm (1.0 to 2.0 microinches) below the nominal surface plane. The average spot diameter was 20.3 µm (0.8 mils).

### Example 2:

A nickel-phosphorous alloy was plated onto an aluminium disk as in Example 1, and texturized as in Example 1 except that laser 44 was powered by a current of 17.5 milliamperes. The resulting spots had rims or ridges from about 25.4 to 50.8 nm (1.0 to 2.0 microinches) above the nominal surface, with depressions of about 101.6 to 127 nm (4.0 to 5.0 microinches) below the nominal surface, with an inter-track pitch of 20.3 µm (0.8 mils).

### Example 3:

A nickel phosphorous layer was plated onto an aluminium disc and texturized as in Example 1, except that laser 44 was powered by a current of 17.5 milliamperes, and the inter-track pitch was 25.4 µm (1.0 mil). The spot structure was similar to that in Example 2.

### Example 4.

A nickel phosphorous layer was plated onto an aluminium rigid disk and texturized as in Example 1, except that the inter-track pitch was reduced to 12.7 µm (0.5 mils) and the total width of the area was 3.8 mm (150 mils). Adjacent spots touched one another, with typical spots having ridges raised about 15.24 nm (0.6 microinches) and central depression depths of about 30.48 nm (1.2 microinches).

While the generally circular spot configuration is obtained with a vertically or perpendicularly oriented laser beam, the laser beam may be directed onto disc 16 at an inclined angle, e.g. 45 degrees from the horizontal. The result is an elongation of each spot into an elliptical or oval shape. When the beam is tilted yet maintained in a vertical plane containing the disk radius, and when the disk rotational speed and firing frequency are matched to provide a circumferential distance between spots approximating the spot diameter, the result is a circumferential ring of adjacent, elongated spots 64 as on a substrate 66 (Figure 7).

It is to be appreciated that the control parameters can be varied to provide alternatives to the previously discussed patterns, e.g. by varying the inter-track pitch so that it increases in the radially outward direction, by staggering adjacent rings so that spots in each ring correspond to regions between spots in next adjacent rings, by random arrangement of spots, and by arrangements in which the laser peak power or spot frequency is progressively decreased for radially outward rings in order progressively to decrease roughness in the radially outward direction in the head contact band.

The laser is used to concentrate energy selectively upon a plurality of locations over a treatment area. This controllably alters the topography of the surface at each location. Adjacent locations are spaced apart from one another by a distance substantially less than the length or width of a magnetic transducing head. The roughness of the texturized surface is at least twice the nominal roughness of the specular polished substrate surface.

Figure 8 shows a substrate 63 with a mechanically textured substrate surface. Depending upon the size of grit selected and the nature of the paper or cloth supporting the grit, the substrate surface can be textured to a selected roughness to provide a head contact sector dedicated to contact with the transducing head. In sharp contrast to the profiles shown in Figures 4 to 7, however, Figure 8 reveals that the surface of substrate 63 has an acicular topography charcteristic of mechanical texturing. The textured surface includes peaks 65 and indentations or valleys 67, irregular in height and depth and characterized by steep slopes and pointed edges or ends.

Furthermore, the pointed edges are areas of stress concentration due to the cutting action of the grit. Consequently, the tips of the highest peaks are susceptible to being broken away when contacted by a transducing head moving relative to the substrate. An upper tip 69 of one of the peaks has been broken away to leave a more planar, though not necessarily horizontal, upper surface 71.

Once the tips have been broken away from a multiplicity of such peaks, two problems arise, both of which hamper the long term reliability of the recording system. First, the multiplicity of generally flat surfaces like surface 71 (rather than the original pointed tips) increases the overall area of surface contact with the transducing head, increasing the stiction and friction problems (commonly referred to as friction build-up). Secondly, the broken away tips tend to adhere to the transducing head as they break away, build up in valleys 67 and expose the magnetic layer in peak regions for possible corrosion sites, or remain free as particulate contaminate, in any case reducing the reliability of the recording system.

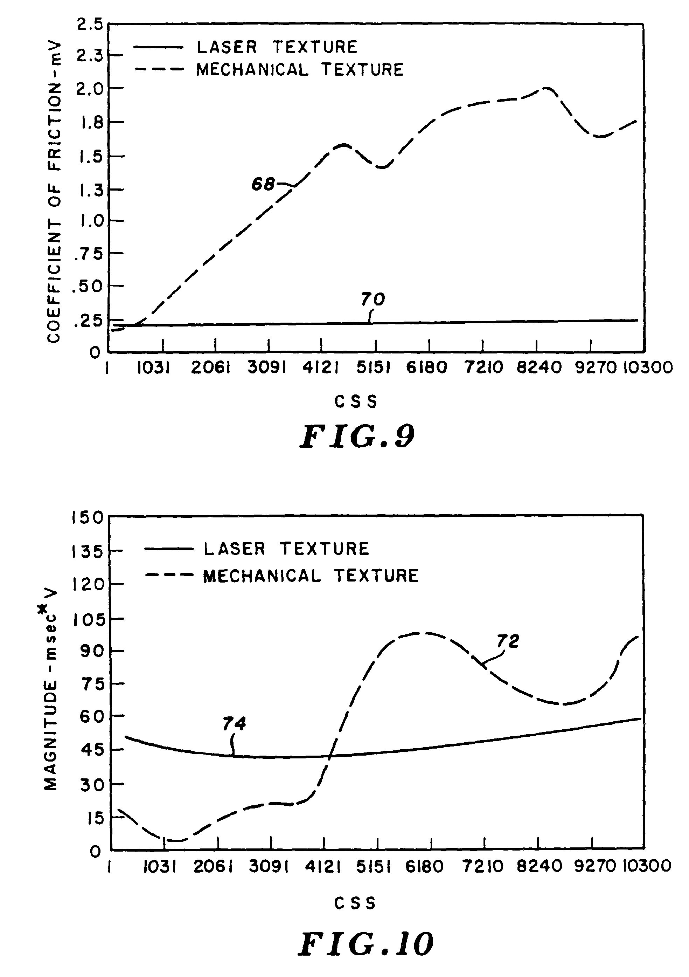

The charts in Figures 9 and 10 represent comparisons of mechanically textured disks with disks texturized by a laser in accordance with the present invention. More particularly, mechanically textured disks and laser texturized disks were compared both initially and at various stages of contact start-stop testing. All disks were provided with 30 nm (300 angstroms) thick protective layer of sputtered carbon. Actual test results would appear as a series of vertical bars indicating ranges. The lines shown represent a series of midpoints of such vertical bars.

All the disks initially had a coefficient of friction of about 0.25 (Figure 9) in the case of mechanically textured disks, represented by the broken line 68, the coefficient of friction was well above 1.0 after 3,000 contact start-stop cycles, and was close to 2.0 after about 10,000 cycles. In conrast, the coefficient of friction for the laser texturized disks remained at about 0.25, as indicated by solid line 70. As the coefficient of friction is the principal indicator of wear to the head and head contact surface of the disk, the results demonstrate a surprising durability in the head contact area when texturized in accordance with the present invention.

The comparison of mechanically textured and laser texturized disks over numerous contact start-stop cycles shown in Figure 10, concerns the envelope of self-excited head gimbal arm vibration. The self-excited head/gimbal arm vibration energy is defined as the energy spent at the head/disk interface from the time the head overcomes the stiction force to free flying during the start-stop testing. It is measured by integrating the strain experienced by the head arm, measured here by a capacitance probe, over the aforementioned time period. This value, measured as the transducing head takes off from the head contact area when the disk is being accelerated from stop, predicts future wear to the head and head contact region of the disk. As seen from a comparison of broken line 72 representing results from mechanically textured disks and solid line 74 representing results from laser texturized disks, the mechanically textured discs initially exhibited a lower reading, but surpassed the laser texturized disks well before 5,000 contact start-stop cycles, and thereafter remained above the laser texturized disks. Again, a substantially longer useful life is indicated for both heads and disk contact surfaces, when such surfaces are texturized to provide smooth, rounded contours in accordance with the present invention.

Further, as the tests from which Figures 9 and 10 derive, it was found that not only are the average values for coefficient of friction and envelope of self-excited head/gimbal arm vibration improved in the case of laser texturized disks, but that ranges of these values remain substantially uniform over numerous contact start-stop cycles, indicating that laser texturizing leads to a more reliable head/disk interface. By contrast, in the case of mechanically textured disks, the range of values widens as the number of contact start-stop cycles increases, i.e. the aforementioned vertical bars indicating ranges becomes longer.

Thus, whether media texturized in accordance with the present invention is flexible or rigid, a substantial and surprising increase in durability is achieved, measurable principally in its ability to maintain a relatively low coefficient of friction even after numerous contact start-stop cycles, e.g. 10,000 or more. It is believed that the smooth, rounded contours of the surface discontinuities are a major contributing factor to increased durability. A further factor is the improved control of the texturizing process, yielding a high degree of uniformity in surface roughness throughout the specially texturized surface. The laser is a preferred device for the controlled texturizing.

In connection with rigid disks and flying heads, the present invention affords the added advantage of provding a surface area dedicated to contact with the transducing head during accelerations, decelerations and with the disk at rest. Substantially all the remaining disk surface area can have a specular finish ideally suited for reading and recording data.

It will be appreciated that the texturizing operation may take place at a different stage of the manufacturing process, for example, after the magnetizable film has been deposited on the substrate surface. As each deposited layers is of substantially uniform thickness, each replicates the surface contours of the surface on which it is deposited, so that the texturizing can be effected at any stage.

## Claims

1. A process for manufacturing a magnetic recording medium (16) of the type having a data storage region (34) over which a transducing head (22) flies, and a head contact region for the magnetic transducing head (22) during periods of acceleration, deceleration and non-movement of the recording medium relative to the transducing head, the process including forming a plurality of layers (38,40,50,52,54) at least one of which is a substrate (38,40) of non-magnetizable material, and at least one of which is a magnetizable film (52); with one of the layers defining an outer surface (54) of the medium; and subjecting the surface of one of the layers to radiant energy in a treatment area to roughen the surface of said one layer at least in said treatment are thereof so that said outer surface (54) of the recording medium (16) has a rough surface portion (32) due to said subjecting of the surface thereby forming the head contact region, another portion (34) of the outer surface of the recording medium being the data storage region and having a smooth surface; characterised in that the radiant energy is pulsed selectively upon a plurality of locations of the treatment area to form at each of said locations a mark extended outwardly from a nominal surface plane of the layer to which radiant energy is applied by a height in the range of 5.08 to 50.8 nm (0.2 to 2 microinches), having a diameter range of 2.54 to 127 µm (0.1 to 5 mils), and being free of sharp edges.

2. A process as claimed in claim 1 further comprising:
forming a specular surface (48) on said non-magnetizable substrate (38,40), said substrate surface being substantially planar and having a nominal roughness;
depositing said magnetizable film (52) over said substrate surface (48) with a substantially uniform thickness; and
said subjecting the surface comprises concentrating the radiant energy upon said plurality of locations over said treatment area on a selected surface of one of said substrate (38,40) and said film (52), to controllably alter the topography of the selected surface at each of the locations, so that the roughness of said selected surface throughout said treatment area is at least twice said nominal roughness, the data storage portion (34) being formed with said nominal roughness.

3. A process as claimed in claim 1 or 2, in which said subjecting the surface comprises applying laser energy.

4. A process as claimed in claim 3, in which said pulsed laser energy forms at each of said locations, a rounded central depression (60) extending inwardly of a nominal surface plane of the selected surface (48), and a generally circular and rounded rim (62) surrounding the central depression (60) and extending outwardly of the nominal surface plane.

5. A process as claimed in claim 4, in which said subjecting of the surface includes selecting said locations to distribute the depressions (60) generally uniformly over the treatment area.

6. A process as claimed in claim 4 or 5, in which concentrating energy further includes forming said depressions (60) over at least one-half of the treatment area.

7. A process as claimed in any one of claims 1 to 6, in which said treatment area comprises less than ten percent of the surface area of the selected surface.

8. A process as claimed in any one of claims 4 to 6 or in claim 7 when dependent on any one of claims 4 to 6, in which the substrate (38,40) is a disc (16), and said subjecting the surface further comprises:
(a) rotating the disc at a controlled rotational velocity;
(b) simultaneously applying said pulsed laser energy at a controlled frequency corresponding to the rotational velocity to form a first ring comprising a series of said rounded depressions;
(c) displacing said laser radially relative to the disc;
(d) applying said pulsed laser energy at said controlled frequency while rotating said disc at said rotational velocity to form a subsequent ring comprising a subsequent series of said depressions concentric with the first ring and radially spaced apart from the first ring by a pitch corresponding to the amount of laser radial displacement; and
(e) repeating steps (c) and (d) to form a selected number of concentric rings, whereby the treatment area comprises said selected number of concentric rings in the form of an annular band.

9. A process as claimed in claim 8, in which when the width of said transducer head (22) is aligned substantially radially of the disc (16), said annular band (22) has a width in the radial direction at least as great as said transducer head width.

10. A process as claimed in any one of the preceding claims, in which said concentrating energy is performed on the substrate (38,40).

11. A process as claimed in any one of the preceding claims, in which said substrate body is substantially rigid and is formed of aluminum and said process further comprises plating a layer (40) of a nickel-phosphorous alloy onto the aluminum, as a layer substantially uniform in thickness, said selected surface comprising a surface of the nickel-phosphorous alloy layer.

12. A process as claimed in any one of the preceding claims, further comprising depositing a protective cover layer (54) over said magnetizable film (52), said cover layer having a substantially uniform thickness and replicating the surface contours of said magnetizable film (52).

13. A process as claimed in any one of the preceding claims, further comprising: depositing a non-magnetizable underlayer (50) on said substrate (38,40) prior to depositing said magnetizable film (52) over said substrate (38,40), said non-magnetizable underlayer (50) having a substantially uniform thickness and replicating the surface contours of the substrate (38,40).

14. A process as claimed in claim 4 or 5, in which concentrating energy includes:
a) moving said substrate (38,40) at a controlled velocity in a longitudinal direction;
b) simultaneously directing a beam (46) of said pulsed laser energy upon said surface (48) at a controlled frequency to form a first row of said depressions (60);
c) displacing said beam (46) transversely a selected pitch, and directing said beam (46) of laser energy while longitudinally moving said substrate (38,40) to form a subsequent row of said depressions (60) parallel to the first row; and
d) repeating step (c) a selected number of times to form the treatment area as a longitudinal band of a selected transverse width.

15. A magnetic recording medium (16) comprising a plurality of layers (38,40,50,52,54), at least one of which is a substrate (38,40) of non-magnetizable material, and at least one of which is a magnetizable film (52), one of the layers defining an outer surface (54) of the recording medium (16) roughened by radiant energy applied to a treatment area to form upon the outer surface (54) a rough surface portion (32), providing a head contact region for a magnetic transducing head (22) during periods of acceleration, deceleration and non-movement of the recording medium relative to the transducing head, another portion (34) of the outer surface of the recording medium being for the storage of data and having a smooth surface over which, in use, the transducer head (22) flies; characterised in that the radiant energy is pulsed selectively upon a plurality of locations over a treatment area of one of said layers, forming at each of said locations a mark extended outwardly from a nominal surface plane of the layer to which radiant energy is applied by a height in the range of 5.08 to 50.8 nm (0.2 to 2 microinches), having a diameter in the range of 2.54 to 127 µm (0.1 to 5 mils) and being rounded and free of sharp edges.

16. A device as claimed in claim 15, wherein the rough surface portion (32) has a roughness at least twice the nominal roughness of the data storage portion (34).

17. A device as claimed in claim 15 or 16 in which said rough surface portion (32) has a roughness of at least 12.7 nm (0.5 microinches), while said data storage portion (34) has a roughness of at most 2.54 nm (0.1 microinches).

18. A device as claimed in claim 15, in which the device is a disc (16) and the non-magnetizable substrate comprises a substantially rigid substrate (38) with a substantially planar surface; and
each of said marks includes depressions (60), extended inwardly of the nominal surface plane toward said substrate (38) a distance in the range of 12.7 to 254 nm (0.5 to 10 microinches), and a rounded rim (62) substantially surrounding each depression (60) and extended outwardly of the nominal surface plane by a height of 5.08 nm to 50.8 nm (0.2 to 2 microinches) each of said rims (62) having a diameter in the range of from 2.54 to 127 µm (0.1 to 5 mils).

19. A device as claimed in claim 18, in which said rough surface portion (32) is an annular band substantially concentric on a rotational axis of said disc (16), and has a radial dimension exceeding the width of said transducing head (22).

20. A device as claimed in claims 18 or 19, in which said depressions (60) and corresponding rims (62) comprise at least fifty percent of the surface area of said rough surface portion (32).

21. A device as claimed in any one of claims 15 to 20, in which adjacent depressions in said rough surface portion (32) are spaced apart from one another a distance no greater than 127 µm (5 mils).

22. A device as claimed in claim 15, in which the device is a disc (16) wherein the outer surface has a nominal surface plane and the non-magnetizable substrate comprises a substantially rigid substrate (38) with a substantially planar surface; and
the data storage portion of the substrate surface (48) has an annular first data region (34) with a surface roughness of at most 5.08 nm (0.2 microinches), and the rough surface portion (32) comprises an adjacent annular second region (32), said substrate surface having a nominal surface plane and including throughout said second region (32) a plurality of depressions (60) extended inwardly of the nominal plane at least 6.3 nm (0.25 microinches) and ridges (62) adjacent the depressions (60) and extended outwardly of the nominal plane by a height of at least 10.16 nm (0.4 microinches), said ridges (62) being rounded and free of sharp edges.

23. A device as claimed in claim 22, in which said second region (32) lies radially inwardly of the first region (34).

24. A device as claimed in claim 22 or 23, in which said second region (34) has a width, radially of said disc (16), in the range of 1.27 to 12.7 nm (0.05 to 0.5 microinches).

25. A device as claimed in any one of claims 22 to 24, in which said depressions (60) and rims (62) are generally circular, with adjacent ones of said depressions (60) spaced apart from one another by at most 127 µm (5 mils).

26. A device as claimed in any one of claims 22 to 25, in which the rims (62) have diameters in the range of from 2.54 to 127 µm (0.1 to 5.0 mils).

27. A device as claimed in any one of claims 15 to 26, in which said substrate (38,40) includes an aluminium body (38) and a layer (40) of a nickel-phosphorous alloy plated on said body, with said marks (60) formed in said nickel-phosphorous alloy, and wherein said magnetizable film (52) is formed over said alloy and replicates the surface contours of said substrate surface.

28. A device as claimed in claim 27 further including:
a protective cover layer (54) deposited on said magnetizable film (52) as a layer substantially uniform in thickness whereby it replicates the surface contours of said magnetizable film.

## Patentansprüche

1. Verfahren zur Herstellung eines magnetischen Aufzeichnungsmediums (16) von der Art, das einen Datenspeicherbereich (34), über den ein Wandlerkopf (22) fliegt, und einen Kopf-Kontaktbereich für den magnetischen Wandlerkopf (22) während der Perioden der Beschleunigung, Abbremsung und des Stillstandes des Aufzeichnungsmediums gegenüber dem Wandlerkopf aufweist, wobei das Verfahren die Ausbildung einer Vielzahl von Schichten (28, 40, 50, 52, 54), von denen zumindest eine ein Substrat (38, 40) aus nichtmagnetisierbarem Material ist, und von denen zumindest eine ein magnetisierbarer Film (52) ist, wobei eine der Schichten eine Außenoberfläche (54) des Mediums bildet, und die Beaufschlagung der Oberfläche einer der Schichten mit einer Strahlungsenergie in einem Behandlungsbereich einschließt, um die Oberfläche der einen Schicht zumindest in deren Behandlungsbereich aufzurauhen, so daß die Außenoberfläche (54) des Aufzeichnungsmediums (16) einen rauhen Oberblächenabschnitt (32) aufgrund der Beaufschlagung der Oberfläche mit der Strahlungsenergie zur Bildung des Kopf-Kontaktbereiches aufweist, während ein anderer Abschnitt (34) der Außenoberfläche des Aufzeichnungsmediums der Datenspeicherbereich ist, der eine glatte Oberfläche aufweist,
dadurch gekennzeichnet, daß die Strahlungsenergie selektiv auf eine Vielzahl von Stellen des Behandlungsbereiches impulsförmig aufgebracht wird, um an jeder dieser Stellen eine Marke zu bilden, die sich von einer Nennoberflächenebene der Schicht, die mit Strahlungsenergie beaufschlagt wird, nach außen bis zu einer Höhe im Bereich von 5,08 bis 50,8 nm (0,2 bis 2 Mikrozoll) erstreckt, einen Durchmesserbereich von 2,54 bis 1,27 µm (0,1 bis 5 Millizoll) aufweist und frei von scharfen Kanten ist.

2. Verfahren nach Anspruch 1, das weiterhin die folgenden Schritte umfaßt:
Ausbilden einer spiegelnden Oberfläche (48) auf dem nichtmagnetisierbaren Substrat (38, 40), wobei diese Substratoberfläche im wesentlichen eben ist und eine Nennrauhigkeit aufweist,
Abscheiden des magnetisierbaren Films (52) über der Substratoberfläche (48) mit einer im wesentlichen gleichförmigen Dicke, und
wobei die Beaufschlagung der Oberfläche die Konzentration der Strahlungsenergie auf die Vielzahl von Stellen über den Behandlungsbereich auf einer ausgewählten Oberfläche entweder des Substrates (38, 40) oder des Films (52) umfaßt, um in steuerbarer Weise die Topographie der ausgewählten Oberfläche an jeder der Stellen derart zu ändern, daß die Rauhigkeit der ausgewählten Oberfläche über den Behandlungsbereich hinweg zumindestens gleich dem Doppelten der Nennrauhigkeit ist, wobei der Datenspeicherbereich (34) mit der Nennrauhigkeit ausgebildet ist.

3. Verfahren nach Anspruch 1 oder 2, bei dem die Beaufschlagung der Oberfläche das Aufbringen von Laserenrgie umfaßt.

4. Verfahren nach Anspruch 3, bei dem die impulsförmige Laserenergie an jeder der Stellen eine abgerundete, in der Mitte liegende Vertiefung (60), die sich von einer Nennoberflächenebene der ausgewählten Oberfläche (48) aus nach innen erstreckt, und einen allgemein kreisförmigen und abgerundeten Kranz (62) bildet, der die in der Mitte liegende Vertiefung (60) umgibt und sich von der nominellen Oberflächenebene aus nach außen erstreckt.

5. Verfahren nach Anspruch 4, bei dem die Beaufschlagung der Oberfläche die Auswahl der Stellen derart einschließt, daß die Vertiefungen (60) allgemein gleichförmig über den Behandlungsbereich verteilt werden.

6. Verfahren nach Anspruch 4 oder 5, bei dem die Konzentration der Energie weiterhin die Ausbildung der Vertiefungen (60) über zumindestens eine Hälfte des Behandlungsbereiches einschließt.

7. Verfahren nach einem der Ansprüche 1 bis 6, bei dem der Behandlungsbereich weniger als 10% des Oberflächenbereiches der ausgewählten Oberfläche umfaßt.

8. Verfahren nach einem der Ansprüche 4 bis 6 oder in Anspruch 7 unter Rückbeeziehung auf einen der Ansprüche 4 bis 6, bei dem das Substrat (38, 40) eine Platte ist, und bei dem die Beaufschlagung der Oberfläche weiterhin folgende Schritte umfaßt:
(a) Drehen der Platte mit einer gesteuerten Drehgeschwindigkeit,
(b) gleichzeitiges Aufbringen der impulsförmigen Laserenergie mit einer gesteuerten Frequenz, die der Drehgeschwindigkeit entspricht, um einen ersten Ring zu bilden, der eine Serie von abgerundeten Vertiefungen umfaßt,
(c) Verschieben des Lasers in Radialrichtung gegenüber der Platte,
(d) Aufbringen der impulsförmigen Laserenergie mit der gesteuerten Frequenz, während die Platte mit der 5 Drehgeschwindigkeit gedreht wird, um einen nachfolgenden Ring zu bilden, der eine nachfolgende Serie von Vertiefungen konzentrisch zum ersten Ring umfaßt und in Radialrichtung von dem ersten Ring durch eine Teilung entfernt ist, die dem Ausmaß der radialen Verschiebung des Lasers entspricht, und
(e) Wiederholen der Schritte (c) und (d) zur Ausbildung einer ausgewählten Anzahl von konzentrischen Ringen, wodurch der Behandlungsbereich die ausgewählte Anzahl von konzentrischen Ringen in Form eines ring5 förmigen Bandes umfaßt.

9. Verfahren nach Anspruch 8, bei dem bei Ausrichtung der Breite des Wandlerkopfes (22) im wesentlichen in Radialrichtung der Platte (16) das ringförmige Band (22) eine Breite in der Radialrichtung aufweist, die zumindestens so groß wie die Breite des Wandlerkopfes ist.

10. Verfahren nach einem der vorhergehenden Ansprüche, bei dem die Konzentration der Energie auf dem Substrat (38, 40) ausgeführt wird.

11. Verfahren nach einem der vorhergehenden Ansprüche, bei dem der Substratkörper im wesentlichen starr ist und aus Aluminium gebildet ist, wobei das Verfahren weiterhin die Plattierung einer Schicht (40) aus einer Nickel-Phosphor-Legierung auf das Aluminium in Form einer eine im wesentlichen gleichförmige Dicke aufweisenden Schicht umfaßt, wobei die ausgewählte Oberfläche eine Oberfläche der Nickel-Phosphor-Legierungsschicht ist.

12. Verfahren nach einem der vorhergehenden Ansprüche, das weiterhin die Abscheidung einer Schutz-Deckschicht (54) über dem magnetisierbaren Film (52) umfaßt, wobei die Deckschicht eine im wesentlichen gleichförmige Dicke aufweist und die Oberflächenkonturen des magnetisierbaren Filmes (52) nachbildet.

13. Verfahren nach einem der vorhergehenden Ansprüche, das weiterhin das Abscheiden einer nichtmagnetisierbaren Unterschicht (50) auf dem Substrat (38, 40) vor der Abscheidung des magnetisierbaren Films (52) über dem Substrat (38, 40) umfaßt, wobei die nichtmagnetisierbare Unterschicht (50) eine im wesentlichen gleichförmige Dicke aufweist und die Oberflächenkonturen des Substrates (38, 40) nachbildet.

14. Verfahren nach Anspruch 4 oder 5, bei dem die Konzentration der Energie folgende Schritte einschließt:
a) Bewegen des Substrates (38, 40) mit einer gesteuerten Geschwindigkeit in einer Längsrichtung,
b) gleichzeitiges Richten eines Strahls (46) der impulsförmigen Laserenergie auf die Oberfläche (48) mit einer gesteuerten Freuquenz zur Bildung einer ersten Reihe der Vertiefungen (60),
c) Verschieben des Strahls (46) in Querrichtung mit einer ausgewählten Teilung, und Richten des Strahls (46) aus Laserenergie, während das Substrat (38, 40) in Längsrichtung bewegt wird, um eine nachfolgende Reihe der Vertieffungen (60) parallel zu der ersten Reihe zu bilden, und
d) Wiederholen des Schrittes (c) über eine ausgewählte Anzahl von Malen, um den Behandlungsbereich als längsverlaufendes Band mit einer ausgeählten Querbreite zu formen.

15. Magnetisches Aufzeichnungsmedium (16) mit einer Vielzahl von Schichten (38, 40, 50, 52, 54), von denen zumindest eine ein Substrat (38, 40) aus nichtmagnetisierbarem Material ist, und von denen zumindest eine ein magnetisierbarer Film (52) ist, wobei eine der Schichten eine Außenoberfläche (54) des Aufzeichnungsmediums (16) ist, die durch auf einen Behandlungsbereich aufgebrachte Strahlungsenergie aufgerauht, ist, um auf der Außenoberfläche (54) einen rauhen Oberflächenabschnitt (32) zu bilden, der einen Kopf-Kontaktbereich für einen magnetischen Wandlerkopf (22) während der Perioden der Beschleunigung, Abbremsung und des Stillstandes des Aufzeichnungsmediums relativ zum Wandlerkopf bildet, während ein anderer Abschnitt (34) der Außenoberfläche des Aufzeichnungsmediums zur Speicherung von Daten dient und eine glatte Oberfläche aufweist, über die im Betrieb der Wandlerkopf (22) fliegt,
dadurch gekennzeichnet, daß die Strahlungsenergie impulsförmig selektiv auf eine Vielzahl von Stellen über den Behandlungsbereich einer der Schichten hinweg aufgebracht wird, wobei an jeder der Stellen eine Marke gebildet wird, die von einer nominellen Oberflächenebene der Schicht, die mit der Strahlungsenergie beaufschlagt wird, nach außen hin über eine Höhe im Bereich von 5,.08 bis 50,8 nm (0,2 bis 2 Mikrozoll) erstreckt, einen Durchmesser im Bereich von 2,54 bis 127 µm (0,1 bis 5 Millizoll) aufweist und abgerundet und frei von scharfen Kanten ist.

16. Bauteil nach Anspruch 15, bei dem der rauhe Oberflächenabschnitt (32) eine Rauhigkeit aufweist, die zumindest doppelt so groß ist, wie die nominelle Rauhigkeit des Datenspeicherabschnittes (34).

17. Bauteil nach Anspruch 15 oder 16, bei dem der rauhe Oberflächenabschnitt (32) eine Rauhigkeit von zumindest 12,7 nm (0,5 Mikrozoll) aufweist, während der Datenspeicherabschnitt (34) eine Rauhigkeit von höchstens 2,54 nm (0,1 Mikrozoll) aufweist.

18. Bauteil nach Anspruch 15, bei dem das Bauteil eine Platte (16) ist und das nichtmagnetisierbare Substrat ein im wesentlichen starres Substrat (38) mit einer im wesentlichen ebenen Oberfläche umfaßt, und
wobei jede der Marken Vertiefungen (60), die sich von der nominellen Oberflächenebene aus nach innen in Richtung auf das Substrat (38) über eine Strecke im Bereich von 127 bis 254 nm (0,5 bis 10 Mikrozoll) erstrecken, und einen abgerundeten Kranz (62) einschließt, der jede Vertiefung (60) im wesentlichen umgibt und sich von der Nennoberflächenebene über eine Höhe von 5,08 nm bis 50,8 nm (0,2 bis 2 Mikrozoll) nach außen erstreckt, wobei jeder der Kränze (62) einen Durchmesser im Bereich von 2,54 bis 1,27 µm (0,1 bis 5 Millizoll) aufweist.

19. Bauteil nach Anspruch 18, bei dem der rauhe Oberflächenabschnitt (32) ein ringförmiges Band im wesentlichen konzentrisch zu einer Drehachse der Platte (16) ist und eine radiale Abmessung aufweist, die die Breite des Wandlerkopfes (22) übersteigt.

20. Bauteil nach Anspruch 18 oder 19, bei dem die Vertiefungen (60) und die entsprechenden Kränze (62) zumindest 50% des Oberflächenbereiches des rauhen Oberflächenabschnittes (32) umfassen.

21. Bauteil nach einem der Ansprüche 15 bis 20, bei dem benachbarte Vertiefungen in dem rauhen Oberflächenabschnitt (32) einen Abstand voneinander aufweisen, der nicht größer als 127 µm (5 Millizoll) ist.

22. Bauteil nach Anspruch 15, bei dem das Bauteil eine Platte (16) ist, bei dem die Außenoberfläche eine Nennoberflächenebene aufweist und das nichtmagnetisierbare Substrat ein im wesentlichen starres Substrat (38) mit einer im wesentlichen ebenen Oberfläche umfaßt, und
wobei der Datenspeicherbereich der Substratoberfläche (48) einen ringförmigen ersten Datenbereich (34) mit einer Oberflächenrauhigkeit von höchstens 5,08 nm (0,2 Mikrozoll) aufweist und der rauhe Oberflächenabschnitt (32) einen angrenzenden ringförmigen zweiten Bereich (32) umfaßt, wobei die Substratoberfläche eine Nennoberflächenebene aufweist und über den gesamten zweiten Bereich (32) hinweg eine Vielzahl von Vertiefungen (60), die sich von der Nennebene über zumindest 6,3 nm (0,25 Mikrozoll) nach innen erstrecken, und Wülsten (62) benachbart zu den Vertiefungen (60) einschließt, die sich von der Nennebene aus über eine Höhe von zumindest 10,16 nm (0,4 Mikrozoll) nach außen hin erstrecken, wobei die Kränze (62) abgerundet und frei von scharfen Kanten sind.

23. Bauteil nach Anspruch 22, bei dem der zweite Bereich (32) radial einwärts von dem ersten Bereich (34) liegt.

24. Bauteil nach Anspruch 22 oder 23, bei dem der zweite Bereich (34) in Radialrichtung der Platte (16) eine Breite im Bereich von 1,27 bis 12,7 nm (0,05 bis 0,5 Mikrozoll) aufweist.

25. Bauteil nach einem der Ansprüche 22 bis 24, bei dem die Vertiefungen (60) und Kränze (62) allgemein kreisförmig sind, wobei benachbarte Vertiefungen (60) eine Abstand voneinander von höchstens 1,27 µm (5 Millizoll) aufweisen.

26. Bauteil nach einem der Ansprüche 22 bis 25, bei dem die Kränze (62) Durchmesser im Bereich von 2,54 bis 127 µm (0,1 bis 5,0 Millizoll) aufweisen.

27. Bauteil nach einem der Ansprüche 15 bis 26, bei dem das Substrat (38, 40) einen Aluminiumkörper (38) und eine Schicht (40) aus einer Nickel-Phosphor-Legierung einschließt, die auf dem Körper aufplattiert ist, wobei die Marken (60) in der Nickel-Phosphor-Legierung ausgebildet sind, und wobei der magnetisierbare Film (52) über der Legierung gebildet ist und die Oberflächenkonturen der Substratoberfläche nachbildet.

28. Bauteil nach Anspruch 27, das weiterhin eine Schutzschicht (54) einschließt, die auf dem magnetisierbaren Film (52) als Schicht mit im wesentlichen gleichförmiger Dicke abgeschieden ist, so daß sie die Oberflächenkonturen des magnetisierbaren Films nachbildet.

## Revendications

1. Procédé de fabrication d'un support d'enregistrement magnétique (16) du type ayant une région de stockage de données (34) qu'une tête de transduction (22) survole, et une région de contact de tête destinée à la tête de transduction magnétique ( 2 2 ) pendant les périodes d'accélération, de décélération et de non-mouvement du support d'enregistrement par rapport à la tête de transduction, le procédé comprenant la formation d'une pluralité de couches (38,40,50,52,54), dont une au moins est un substrat (38,40) en un matériau non-magnétisable, et une au moins est une pellicule magnétisable (52) ; une des couches définissant une surface extérieure (54) du support; et l'exposition de la surface de l'une des couches à une énergie rayonnante dans une zone de traitement pour rendre la surface de cette couche au moins dans ladite zone de traitement rugueuse de façon que ladite surface extérieure (54) du support d'enregistrement (16) ait une partie de surface rugueuse (32) due à ladite exposition de la surface, pour former ainsi la région de contact de tête, une autre partie (34) de la surface extérieure du support d'enregistrement étant la région de stockage de données et ayant une surface lisse ; caractérisé en ce que l'énergie rayonnante est pulsée sélectivement sur une pluralité d'emplacements de la zone de traitement pour former à chacun desdits emplacements une marque s'étendant vers l'extérieur depuis un plan nominal de la couche à laquelle l'énergie rayonnante est appliquée sur une hauteur dans la gamme de 5,08 à 50,8 nm (0,2 à 2 micropouces), ayant une gamme de diamètre de 2,54 à 127 µm (0,1 à 5 mils) et étant dépourvue d'arêtes vives.

2. Procédé selon la revendication 1, comprenant en plus les étapes suivantes :
formation d'une surface spéculaire (48) sur ledit substrat non-magnétisable (38,40), ladite surface de substrat étant sensiblement plane et ayant une rugosité nominale ;
dépôt de ladite pellicule magnétisable (52) sur ladite surface de substrat (48) en une épaisseur sensiblement uniforme ; et
ladite exposition de la surface comprenant la concentration de l'énergie rayonnante sur ladite pluralité d'emplacements sur ladite zone de traitement sur une surface choisie dudit substrat (38, 40) et de ladite pellicule (52) pour modifier de manière contrôlée la topographie de la surface choisie à chacun des emplacements, de sorte que la rugosité de ladite surface choisie sur l'ensemble de ladite zone de traitement ait une rugosité au moins deux fois égale à ladite rugosité nominale, la partie de stockage de données (34) étant formée avec ladite rugosité de surface.

3. Procédé selon la revendication 1 ou 2, dans lequel ladite exposition de surface comprend l'application d'une énergie laser.

4. Procédé selon la revendication 3, dans lequel ladite énergie laser pulsée forme au niveau de chacun desdits emplacements, une dépression centrale arrondie (60) s'étendant vers l'intérieur d'un plan nominal de la surface choisie (48), et un rebord généralement circulaire et arrondi (62) entourant la dépression centrale (60) et s'étendant vers l'extérieur du plan nominal.

5. Procédé selon la revendication 4, dans lequel ladite exposition de la surface comprend le choix desdits emplacements pour répartir les dépressions (60) d'une manière généralement uniforme sur la zone de traitement.

6. Procédé selon la revendication 4 ou 5, dans lequel la concentration d'énergie comprend en plus la formation desdites dépressions (60) sur au moins une moitié de la zone de traitement.

7. Procédé selon l'une quelconque des revendications 1 à 6, dans lequel ladite zone de traitement représente moins de dix pour cent de la superficie de la surface choisie.

8. Procédé selon l'une quelconque des revendications 4 à 6 ou selon la revendication 7, quand celle-ci dépend de l'une quelconque des revendications 4 à 6, dans lequel le substrat (38,40) est un disque (16), et ladite exposition de la surface comprend en plus les étapes suivantes :
(a) mise en rotation du disque à une vitesse de rotation contrôlée ;
(b) application simultanée de ladite énergie laser pulsée à une fréquence contrôlée correspondant à la vitesse de rotation pour former un premier anneau comprenant une série desdites dépressions arrondies ;
(c) déplacement dudit laser radialement par rapport au disque ;
(d) application de ladite énergie laser pulsée à ladite fréquence contrôlée pendant la rotation dudit disque à ladite vitesse de rotation pour former un autre anneau comprenant une autre série desdites dépressions, concentrique par rapport au premier anneau et radialement espacé du premier anneau d'un pas correspondant à la quantité de déplacement radial du laser ; et
(e) répétition des étapes (c) et (d) pour former un nombre choisi d'anneaux concentriques, la zone de traitement comprenant ainsi ledit nombre choisi d'anneaux concentriques sous forme d'une bande annulaire.

9. Procédé selon la revendication 8, dans lequel, quand la largeur de ladite tête de transduction (22) est alignée sensiblement radialement par rapport au disque (16), ladite bande annulaire (22) a une largeur dans la direction radiale au moins aussi grande que la largeur de ladite tête de transduction.

10. Procédé selon l'une quelconque des revendications précédentes, dans lequel ladite concentration d'énergie est effectuée sur le substrat (38, 40).

11. Procédé selon l'une quelconque des revendications précédentes, dans lequel le corps dudit substrat est sensiblement rigide et est formé en aluminium et ledit procédé comprend en plus le placage d'une couche (40) en un alliage phosphoreux à base de nickel sur l'aluminium, sous forme de couche d'une épaisseur sensiblement uniforme, ladite surface choisie comprenant une surface de la couche en alliage phosphoreux à base de nickel.

12. Procédé selon l'une quelconque des revendications précédentes, comprenant en plus le dépôt d'une couche de couverture protectrice (54) sur ladite pellicule magnétisable (52), ladite couche de couverture ayant une épaisseur sensiblement uniforme et reproduisant les contours de surface de ladite pellicule magnétisable (52).

13. Procédé selon l'une quelconque des revendications précédentes, comprenant de plus :
le dépôt d'une sous-couche non-magnétisable (50) sur ledit substrat (38, 40), avant dépôt de ladite pellicule magnétisable (52) sur ledit substrat (38, 40), ladite sous-couche non-magnétisable (50) ayant une épaisseur sensiblement uniforme et reproduisant les contours de surface du substrat (38, 40).

14. Procédé selon la revendication 4 ou 5, dans lequel la concentration d'énergie comprend :
a) le déplacement dudit substrat (38, 40) à une vitesse contrôlée dans une direction longitudinale ;
b) l'envoi simultané d'un faisceau (46) de ladite énergie laser pulsée sur ladite surface (48) à une fréquence contrôlée pour former une première rangée desdites dépressions (60) ; et
c) le déplacement dudit faisceau (46) transversalement selon un pas choisi, et l'envoi dudit faisceau (46) d'énergie laser pendant le déplacement longitudinal dudit substrat (38, 40) pour former une autre rangée desdites dépressions (60) parallèle à la première rangée ; et
d) la répétition de l'étape (c) un nombre choisi de fois pour former la zone de traitement sous forme de bande longitudinale d'une largeur transversale choisie.

15. Support d'enregistrement magnétique (16) comprenant une pluralité de couches (38,40,50,52,54), dont une au moins est un substrat (38,40) en un matériau non-magnétisable, et une au moins est une pellicule magnétisable (52), une des couches définissant une surface extérieure (54) du support d'enregistrement (16) rendue rugueuse par une énergie rayonnante appliquée sur une zone de traitement pour former sur la surface extérieure (54) une partie de surface rugueuse (32), fournissant une région de contact de tête destinée à une tête de transduction magnétique (22) pendant les périodes d'accélération, de décélération et de non-mouvement du support d'enregistrement par rapport à la tête de transduction, une autre partie (34) de la surface extérieure du support d'enregistrement étant destinée au stockage de données et ayant une surface lisse, que la tête de transduction (22) survole, en cours d'utilisation ; caractérisé en ce que l'énergie rayonnante est pulsée sélectivement sur une pluralité d'emplacements sur une zone de traitement de l'une desdites couches, pour former à chacun desdits emplacements une marque s'étendant vers l'extérieur depuis un plan nominal de la couche à laquelle l'énergie rayonnante est appliquée sur une hauteur dans la gamme de 5,08 à 50,8 nm (0,2 à 2 micropouces), ayant un diamètre dans la gamme de 2,54 à 127 µm (0,1 à 5 mils) et étant arrondie et dépourvue d'arêtes vives.

16. Dispositif selon la revendication 15, dans lequel la partie de surface rugueuse (32) a une rugosité au moins deux fois égale à la rugosité nominale de la partie destinée au stockage de données (34).

17. Dispositif selon la revendication 15 ou 16, dans lequel ladite partie de surface rugueuse (32) a une rugosité d'au moins 12,7 nm (0,5 micropouce), alors que ladite partie de stockage de données (34) a une rugosité d'au plus 2,54 nm (0,1 micropouce).

18. Dispositif selon la revendication 15, dans lequel le dispositif est un disque (16) et le substrat non-magnétisable comprend un substrat sensiblement rigide (38) ayant une surface sensiblement plane ; et
chacune desdites marques comprend des dépressions (60) s'étendant vers l'intérieur du plan nominal vers ledit substrat (38) sur une distance dans la gamme de 12,7 à 254 nm (0,5 à 10 micropouces), et un rebord arrondi (62) entourant sensiblement chaque dépression (60) et s'étendant vers l'extérieur du plan nominal sur une hauteur de 5,08 à 50,8 nm (0,2 à 2 micropouces), chacun desdits rebords (62) ayant un diamètre dans la gamme de 2,54 à 127 µm (0,1 à 5 mils).

19. Dispositif selon la revendication 18, dans lequel ladite partie de surface rugueuse (32) est une bande annulaire sensiblement concentrique sur un axe de rotation dudit disque (16) et a une dimension radiale excédant la largeur de ladite tête de transduction (22).

20. Dispositif selon les revendications 18 ou 19, dans lequel lesdites dépressions (60) et rebords correspondants (62) représentent au moins cinquante pour cent de la superficie de ladite partie de surface rugueuse (32).

21. Dispositif selon l'une quelconque des revendications 15 à 20, dans lequel les dépressions adjacentes dans ladite partie de surface rugueuse (32) sont espacées l'une de l'autre d'une distance n'excédant pas 127 µm (5 mils).

22. Dispositif selon la revendication 15, dans lequel le dispositif est un disque (16) dont la surface extérieure a un plan nominal et le substrat non-magnétisable comprend un substrat sensiblement rigide (38) ayant une surface sensiblement plane ; et
la partie de stockage de données de la surface de substrat (48) a une première région de données annulaire (34) ayant une rugosité de surface d'au plus 5,08 nm (0,2 micropouce), et la partie de surface rugueuse (32) comprend une deuxième région annulaire adjacente (32), ladite surface de substrat ayant un plan nominal et comprenant dans ladite deuxième région (32) une pluralité de dépressions (60) s'étendant vers l'intérieur du plan nominal sur au moins 6,3 nm (0,25 micropouce) et des rebords (62) adjacents aux dépressions (60) et s'étendant vers l'extérieur du plan nominal sur une hauteur d'au moins 10,16 nm (0,4 micropouce), lesdits rebords (62) étant arrondis et dépourvus d'arêtes vives.

23. Dispositif selon la revendication 22, dans lequel ladite deuxième région (32) se trouve radialement vers l'intérieur de la première région (34).

24. Dispositif selon la revendication 22 ou 23, dans lequel ladite deuxième région (34) a une largeur, radialement par rapport audit disque (16), dans la gamme de 1,27 à 12,7 nm (0,05 à 0,5 micropouce).

25. Dispositif selon l'une quelconque des revendications 22 à 24, dans lequel lesdits dépressions (60) et rebords (62) sont généralement circulaires, lesdites dépressions adjacentes (60) étant espacées l'une de l'autre d'au plus 127 µm (5 mils).

26. Dispositif selon l'une quelconque des revendications 22 à 25, dans lequel les rebords (62) ont des diamètres dans la gamme de 2,54 à 127 µm (0,1 à 5,0 mils).

27. Dispositif selon l'une quelconque des revendications 15 à 26, dans lequel ledit substrat (38,40) comprend un corps en aluminium (38) et une couche (40) en un alliage phosphoreux à base de nickel plaqué sur ledit corps, lesdites marques (60) étant formées dans ledit alliage phosphoreux à base de nickel, et dans lequel ladite pellicule magnétisable (52) est formée sur ledit alliage et reproduit les contours de surface de ladite surface de substrat.

28. Dispositif selon la revendication 27, comprenant de plus:
une couche de couverture protectrice (54) déposée sur ladite pellicule magnétisable (52) sous forme de couche d'une épaisseur sensiblement uniforme qui lui permet de reproduire les contours de surface de ladite pellicule magnétisable.
